# EUROPEAN PATENT SPECIFICATION

(11) **EP 1 972 066 B1**
(45) Date of publication and mention of the grant of the patent: **22.04.2009**
(21) Application number: 06830620.8
(22) Date of filing: 14.12.2006
(51) Int. Cl.: H04B 1/40

(54) **MULTIBAND ANTENNA SWITCH**
MEHRBAND-ANTENNENSCHALTER
COMMUTATEUR D'ANTENNE MULTIBANDE

(30) Priority: 12.01.2006 US 766345 P; 28.02.2006 US 307917; 18.09.2006 US 532544
(43) Date of publication of application: 24.09.2008
(73) Proprietor: Sony Ericsson Mobile Communications AB, 221 88 Lund (SE)
(72) Inventor: TUDOSOIU, Bogdan, S-224 72 Lund (SE); CAMP, William, Chapel Hill, North Carolina 27514 (US)
(74) Representative: Aurell, Henrik
(86) International application number: PCT/EP2006/069705
(87) International publication number: WO 2007/080040

(56) References cited:
- EP-A1- 0 631 400
- WO-A-03/061148
- WO-A-20/05088847
- JP-A- 2003 018 041
- US-A1- 2005 245 201

## Description

### Field of the invention

The present invention relates to a multiband antenna switch, and more particularly an antenna switch implemented in the radio interface of a mobile telephone device. The antenna switch offers a packed solution for using four GSM and eight WCDMA bands in the same phone.

### Background of the invention

In the existing solution for WEDGE (Wideband CDMA Enhanced Data rates for Global Evolution), only a couple of bands can by used due to the high complexity of switching between different bands, space and costs.

Currently, every WCDMA band included in a phone will require its own duplexer and power amplifier. This means that multiple versions of a phone will be required for the different markets that have different frequency bands available.

In WO 03/061148 a multiband radio device is disclosed.

An object of the invention is to provide a multiband antenna switch with only one radio module requiring only a small number of power amplifiers.

A further object of the invention is to provide a broadband duplex connection between the antenna port and the transmission and reception branches.

### Summary of the invention

The present invention solves the above mentioned problem by providing a broadband radio module comprising a power amplifier module and a front end module.

In a first aspect, the invention provides a multiband antenna switch comprising:
a power amplifier module with an antenna port connectable to an antenna, and at least one input port connectable to a transmitter section of a transceiver;
a front end module connectable to the antenna port and a reception section of a transceiver;
wherein said power amplifier module and said front end module are capable of covering a number of frequency bands.

Suitably, the power amplifier module comprises at least two branches with filters and power amplifiers for low and high frequencies, respectively.

In one embodiment, the input port of the power amplifier module comprises a number of channels and switch means for controlling which signal is transmitted from the transceiver.

Suitably, the front end module comprises at least two branches with filters for low and high frequencies, respectively.

In one embodiment, the front end module comprises a number of channels and switch means for controlling which signal is transmitted to the transceiver.

In a further embodiment, the transmission/reception duplexing function is obtained by means of a circulator arrangement.

Branches of the power amplifier module and the front end module may be connected to the antenna port by means of 4-port circulators, one circulator for each branch, with one port of the circulator terminated to provide isolation between receiver and transmitter ports.

Alternatively, branches of the power amplifier module and the front end module may be connected to the antenna port by means of 3-port circulators, one 3-port circulator providing the transmission/reception duplexing function, and one further 3-port circulator being arranged in each power amplifier module branch and having one port of the circulator terminated to provide isolation between receiver and transmitter ports.

One further 3-port circulator may be arranged in each front end module branch and having one port of the circulator terminated to provide isolation between receiver and transmitter ports.

In a still further embodiment, the transmission/reception duplexing function is obtained by means of a power splitter arrangement.

Suitably, the power splitter has a flat frequency response over a broad band and controlled impedances to all the ports.

In a second aspect, the invention provides a portable radio communication device comprising a multiband antenna switch as defined above.

The solution solves implementation of a twelve bands phone with only one antenna port. The solution is minimal which also gives the possibility of "full" RX and TX diversity meaning that two full radio braches can be used by a phone without space constraints.

This solution is not using the switching in the same manner as it is used today and decreases the complexity grade of a twelve band phone solution.

### Brief description of the drawings

The invention will be described in detail below with reference to the accompanying drawings, in which:
Fig. 1 is a schematic view of a first embodiment of an antenna switch according to the invention incorporating 4-port circulators;
Fig. 2 is a schematic view of a second embodiment of an antenna switch according to the invention incorporating 3-port circulators;
Fig. 3 is a schematic view of a second embodiment of an antenna switch according to the invention incorporating a power splitter.

### Detailed description of preferred embodiments

As is mentioned in the introduction, the present invention relates to a multiband antenna switch as may be implemented in the radio interface of portable radio communication devices, such as mobile telephones, communicators, electronic organisers, smartphones and the like. The description will focus on components relevant to the invention, while other components of the mobile telephone device may be conventional.

Here are the bands defined by WCDMA in 25.101 UTRAN FDD:

| Operating | UL frequencies | DL Frequencies |
|---|---|---|
| Band | UE transmit, Node B receive | UE receive, Node B transmit |
| I | 1920 - 1980 MHz | 2110 - 2170 MHz |
| II | 1850 - 1910 MHz | 1930 - 1990 MHz |
| III | 1710 - 1785 MHz | 1805 - 1880 MHz |
| IV | 1710 - 1755 MHz | 2110 - 2180 MHz |
| V | 824 - 849 MHz | 869 - 894 MHz |
| VI | 830 - 840 MHz | 875 - 885 MHz |
| VII | 2500 - 2570 MHz | 2620 - 2690 MHz |
| VIII | 880 - 915 MHz | 925 - 960 MHz |
| IX | 1750 - 1785 MHz | 1845 - 1880 MHz |

| | | |
|---|---|---|
| UL = Uplink DL = Downlink UE = User Equipment | | |

To cover eight of these nine bands as well as four GSM bands a high grade of design, huge costs and a lot of area are required. A lot of designs used today are using duplexers and power amplifiers, PA:s, for each of only one or two of the WCDMA bands. The antenna switch using conventional switches is becoming more and more complex as more WCDMA bands are combined into one radio.

The arrangements according to the present invention will minimize area, decrease costs and give the possibility of using almost all band combinations with the same radio frequency, RF, module.

First of all, the solution is based on a PA (both low and high band) that can cover GPRS (General Packet Radio Service) and EDGE/WCDMA standards. These kind of PA:s are existing on the market.

It is possible to have these PA:s in a PA module, PAM, according the designs that will be presented.

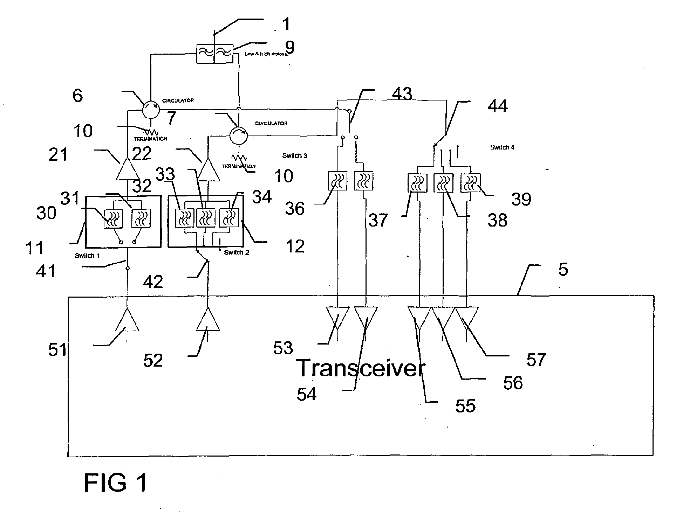

A first embodiment of multiband antenna switch is shown in figure 1. Similar components are denoted by the same reference numerals throughout the figures.

The antenna switch is connected to a transceiver 5 comprising power amplifiers shown schematically that can send and receive signals with EDGE, WCDMA and GSMK modulations.

Starting from antenna port 1 (ANT), a diplexer 9 will be used for separating low bands ( WCDMA 5,6,8 and GSM 900 and 850) from high bands (WCDMA 1,2,3,4,7,9, DCS 1800 and PCS 1900 as well as Bluetooth , WLAN etc).

Such a diplexer can have an insertion loss about 0.3 dB and really high isolation which will minimize the harmonics and spurious emissions.

After the antenna port 1, two branches will be split in reception, RX, and transmission, TX, for both low and high bands as defined above by means of a circulator combination. As is known, a circulator is an RF component having a number of terminals with the characteristic that energy entering one terminal is transmitted to next adjacent terminal (in the direction of the arrow). The circulator provides isolation in the opposite direction. Hence, a circulator may also be termed an isolator depending on the function wanted in the circumstances. Circulators having the required broadband characteristics are commercially available today.

Figure 1 shows a first embodiment of the multiband antenna switch with a circulator arrangement to achieve the transmission/reception duplexing function. A first circulator/isolator 6 is located in the low frequency band and a second circulator/isolator 7 is located in the high frequency band. Here the isolators 6, 7 provide the necessary isolation between the ports so that the impedances of those ports will remain at 50 ohms. This is necessary for all the filters and power amplifiers to work properly. The circulators are shown as 4-port devices with terminated ports 10 so that power amplifiers 21, 22 do not see the out of band impedance of the receive filters 35, 36, 37, 38, 39. The RF signal only propagates in one direction around the ports of the circulators. The receiver part of the transceiver 5 can see the RF power from the transmitter part of the transceiver 5 that reflects off the less than ideal load of the antenna. Thus, the receiver filters must have on the order of 50 dB stop band attenuation in the corresponding transmit band.

Going on RX branches the design continues with a switch for each branch that will allow the possibility of switching. A switch 43 for low RX bands branches between: WCDMA 5&6 / GSM 850 and WCDMA 8/GSM 900 and a switch 44 for high RX branches between: WCDMA 3&9/DCS 1800; WCDMA 2/PCS and WCDMA4 and 1 (with WCDMA bands as defined above). In total, there are five channels covering the twelve bands.

The RF switches must have low insertion loss (typically 0.5 dB) and low intermodulation distortion IMD - below -100 dBm to meet blocking requirements.

For low RX bands, switch 43 may be implemented as a single pole 2 throughput, SP2T, and for high RX bands switch 44 may be implemented as an SP3T. This means that three controls signals are required to control the RX switches.
The control signals can be switched by Baseband for getting GSM and left closed for WCDMA. The control signals to the switches are suitably generated in a baseband ASIC associated with the radio of the radio interface. When the radio is operating as a WCDMA transceiver, the switches are left on for the desired band, because the WCDMA mode is full duplex. When the radio is operating as a GSM transceiver, the switch for the desired receive band is closed only during the receive burst of the GSM signal and opened when the transmitter burst is being generated.

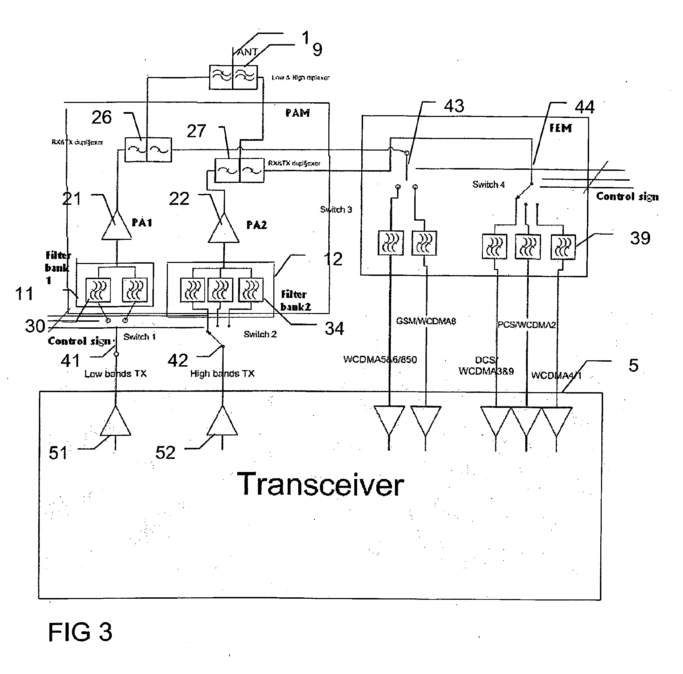

After the RX switches, the design uses bandpass filters 35, 36, 37, 38, 39 (SAW; BAW or FBAR) for getting high attenuation out of band and low ripple in band.
The switches and bandpass filters can be used in a Front END Module (FEM) together and designed accordingly (see figure 3). The RX branches may be connected to the transceiver 5 through RX buffers 53, 54, 55, 56, 57.

The expected insertion loss for low and high bands and LNA input will be max 4 dB.

For the TX branches the transceiver can use TX buffers 51, 52. The buffers should be broadband ones that will cover: one buffer 51 all low bands TX (WCDMA5,6&8) as defined above + GSM 850/GSM 900 and the other buffer 52 TX for (WCDMA 1,2,3,4,9) and DCS 1800 and PCS 1900.

The output of transceiver TX buffers 51, 52 will go to the input ports of the power amplifier module via two switches: one switch 41 for low bands and one switch 42 for high bands.

The switches 41 and 42 will be able to handle both WCDMA (the switch will only be closed for respective band) or they can be switched for TDD (Time Division Duplex) modulations such as: GMSK and 8PSK.

Switches 41 and 42 are suitably RF switch types with low insertion loss, preferably max 0.6 dB.

For low TX bands, switch 41 may be implemented as a SP2T and for high TX bands, and switch 42 may be implemented as an SP3T. This means that three controls signals are required to control the TX switches.

After the TX switches 41, 42, five bandpass filters 30, 31, 32, 33, 34 are used in two filter banks 11, 12, each bank having one output to a power amplifier 21, 22 and several inputs from the respective switch terminals.

Filter bank 11 for low band TX which follows switch 41 will cover both: WCDMA5,6/GSM 850 in one band pass filter 30 and WCDMA8 and GSM 900 in the other band pass filter 31. Requirements on this filter bank: large attenuation out of band and low ripple over the band. The insertion loss is not a key factor and can be quite high.

Filter bank 12 for high band TX, which follows switch 42 will cover: DCS1800/WCDMA3,4 in one band pass filter 32, WCDMA2/PCS 1900 in another band pass filter 33and the band pass filter 33 will cover WCDMA1. Requirements on this filter bank: large attenuation out of band and low ripple over the band. The insertion loss is not a key factor and can be quite high.

The filter banks 11, 12 are connected in two branches to one power amplifier for each of them. The power amplifier 21 covers the low TX bands:
(WCDMA5,6&8) as defined above + GSM 850/GSM 900 and power amplifier 22 covers the high TX bands (WCDMA 1,2,3,4,9) and DCS 1800 /PCS 1900.

Existing PA:s on the market can accommodate both EDGE /GMSK + WCDMA standards. The switches and filter banks together with the power amplifiers can come as a PA module solution that can also include power control.

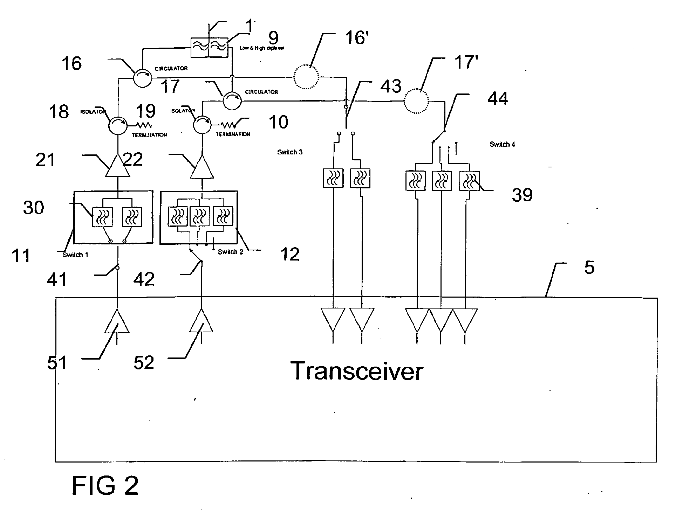

Figure 2 shows a second embodiment of the multiband antenna switch with another circulator/isolator arrangement. In the event that circulators with four ports are not as practical to build as circulators with three ports, the following embodiment of this invention can be used.
In this embodiment, only 3-port circulators are used. The transmission/reception duplexing function is obtained by means of circulators 16 and 17 for the low and high bands, respectively. The isolation between receiver and transmitter ports is achieved with a second pair of circulators 18 and 19 used as isolators. This is achieved by terminating the proper ports of the second circulators 18, 19 in order to prevent reflected RF energy from passing back from the receiver to the power amplifier but instead be absorbed in the terminations 10.

The second embodiment may comprise the same arrangement of filters 30 - 39 in filter banks 11, 12 as well as switches 41 - 44 as the first embodiment.

In this way with either implementation or any combination of unidirectional junctions, isolation is achieved predominantly between the receiver and the power amplifier of the transmitter, but secondarily between all other combinations of ports to the extent of the reflected power off the load and the isolation achieved in the unidirectional junctions.

The antenna may have relatively bad load impedance. As a further alternative, if the receiver filters require a very good controlled impedance in order to achieve the required stop band attenuation, a third junction configured as an isolator 16', 17' (circulator with one terminated port) can be inserted in the line between the circulators 16 and 17 and the receiver filter switches 43 and 44, respectively.

In this manner described the loss between power amplifier and antenna and receiver filter and antenna will be reduced to the range of 1 to 1.5 dB. This is actually better than that in many of the duplexers with narrow frequency gaps between the transmission and reception frequency bands.

The combined frequency bands required are in the range of 15-20% and circulator junctions with this fractional bandwidth are quite practical.

Figure 3 shows a third embodiment of the multiband antenna switch with a power splitter arrangement. In the third embodiment, after the antenna port 1, the two branches will be split in reception, RX, and transmission, TX, for both low and high bands as defined above by means of two power splitters, one power splitter 26 for the low bands and one power splitter 27 for the high bands. The low band power splitter 26 should cover for TX low bands (824 -915 MHz) and for RX low bands from (869 - 960 MHz). The high band power splitter 27 should cover for TX high bands (1710-1980) MHz and for RX bands (1805-2180) MHz. The power splitter will present a flat frequency response over a broad band and controlled impedances (e.g. 50 ohms) to all the ports. The power splitters will provide the necessary isolation for the receiver filters to work properly but at the cost of an added 3 dB insertion loss in each path (assuming one input and two outputs) for all GSM/EDGE and WCDMA in all RX and TX modes.

Also the third embodiment may comprise the same arrangement of filters 30 - 39 in filter banks 11, 12, power amplifiers 21, 22 as well as switches 41 - 44 as the first embodiment.

The solution presented offers a minimal solution for affording four GSM (both GPRS and EDGE) together with eight WCDMA bands, both with respect to cost and space. Instead of switching at the antenna port we are switching modes close to the transceiver for being able to receive and send both GSM TDD and WCDMA.

The invention can be applied in portable radio communication such as mobile telephones, communicators, electronic organisers, smartphones and the like. As is appreciated by a person skilled in the art, the specific choice of components may be varied within the frame of the present invention, the scope of which is only limited by the claims below.

## Claims

1. A multiband antenna switch comprising
- a power amplifier module with an antenna port (1) connectable to an antenna wherein the power amplifier module comprises a first branch for low frequency bands and a second branch for high frequency bands, wherein each branch comprises a duplexing means (6,7,26,27) arranged to split each branch into a receiver branch and a transmission branch, a power amplifier (21,22) for the frequency bands of that branch and a filter bank (11,12) connected to a switching means (41,42) arranged to switch between frequency bands in the respective branch to connect the branch to a transmitter section of a transceiver (5); each branch is further being connectable to the antenna port via a diplexer (9),
- a reception front end module comprising a first low frequency band branch and a second high frequency band branch connectable to the antenna port (1) via the diplexer (9) and the first and second duplexing means (6,7,26,27) in the power amplifier module and via switching means (43,44) connectable to a reception section of a transceiver, wherein said power amplifier module and said front end module are capable of covering a number of frequency bands

2. A multiband antenna switch according to claim 1, wherein the switching means (41,43) in the low frequency band branch are arranged to switch between two bands.

3. A multiband antenna switch according to claim 1, wherein the switching means (42,44) in the high frequency band branch are arranged to switch between three bands.

4. A multiband antenna switch according to claim 1, wherein the filter banks (11,12) comprises filter arrangement for the different frequency bands.

5. A multiband antenna switch according to claim 1, wherein the duplexing means (6,7) are circulators.

6. A multiband antenna switch according to claim 5, wherein the branches of the power amplifier module and the front end module are connected to the antenna port by means of 4-port circulators, one circulator for each branch, with one port of the circulator terminated to provide isolation between receiver and transmitter ports.

7. A multiband antenna switch according to claim 5, wherein the branches of the power amplifier module and the front end module are connected to the antenna port by means of 3-port circulators, one 3-port circulator providing the transmission/reception duplexing function, and one further 3-port circulator being arranged in each power amplifier module branch and having one port of the circulator terminated to provide isolation between receiver and transmitter ports.

8. A multiband antenna switch according to claim 7, wherein one further 3-port circulator is arranged in each front end module branch and having one port of the circulator terminated to provide isolation between the receiver and transmitter ports.

9. A multiband antenna switch according to claim 1, wherein the transmission/reception duplexing function is obtained by means of a power splitter arrangement.

10. A multiband antenna switch according to claim 9, wherein the power splitter has a flat frequency response over a broad band and controlled impedances to all the ports.

11. A multiband antenna switch according to claim 1, wherein the multiband antenna switch is able to receive and send four GSM together with eight WCDMA bands.

12. A portable radio communication device comprising a multiband antenna switch as claimed in any of the preceding claims.

## Patentansprüche

1. Multiband-Antennenschalter mit:
- einem Leistungsverstärkermodul mit einem Antennenanschluss (1), der mit einer Antenne verbindbar ist, wobei das Leistungsverstärkermodul einen ersten Zweig für Niederfrequenzbänder und einen zweiten Zweig für Hochfrequenzbänder umfasst, wobei jeder Zweig eine Duplex-Vorrichtung (6, 7, 26, 27) umfasst, die angeordnet ist, jeden Zweig in einen Empfängerzweig und einen Übertragungszweig zu teilen, wobei ein Leistungsverstärker (21, 22) für die Frequenzbänder jenes Zweiges und eine Filterbank (11, 12) mit einer Schaltvorrichtung (41, 42) verbunden ist, die angeordnet ist, zwischen den Frequenzbändern in dem jeweiligen Zweig zu schalten, um den Zweig mit einem Senderabschnitt eines Transceivers (Sender/Empfänger) (5) zu verbinden, wobei jeder Zweig weiter mit dem Antennenanschluss über einen Diplexer (9) verbindbar ist,
- einem Empfangs-Front-End-Modul mit einem ersten Niederfrequenzbandzweig und einem zweiten Hochfrequenzbandzweig, die mit dem Antennenanschluss (1) über den Diplexer (9) und die erste und zweite Duplex-Vorrichtung (6, 7, 26, 27) in dem Leistungsverstärkermodul verbindbar sind und über eine Schaltvorrichtung (43, 44) mit einem Empfangsabschnitt eines Transceivers verbindbar ist, wobei das Leistungsverstärkermodul und das Front-End-Modul in der Lage sind, eine Anzahl von Frequenzbändern abzudecken.

2. Multiband-Antennenschalter nach Anspruch 1, wobei die Schaltvorrichtungen (41, 43) in dem Niederfrequenzbandzweig angeordnet sind, zwischen zwei Bändern zu schalten.

3. Multiband-Antennenschalter nach Anspruch 1, wobei die Schaltvorrichtungen (42, 44) in dem Hochfrequenzbandzweig angeordnet sind, zwischen drei Bändern zu schalten.

4. Multiband-Antennenschalter nach Anspruch 1, wobei die Filterbänke (11, 12) eine Filteranordnung für die unterschiedlichen Frequenzbänder umfassen.

5. Multiband-Antennenschalter nach Anspruch 1, wobei die Duplex-Vorrichtungen (6, 7) Zirkulatoren sind.

6. Multiband-Antennenschalter nach Anspruch 5, wobei die Zweige des Leistungsverstärkermoduls und des Front-End-Moduls mit dem Antennenanschluss mittels 4-Anschluss-Zirkulatoren verbunden sind, einen Zirkulator für jeden Zweig, mit einem Anschluss des Zirkulators terminiert, um eine Isolation zwischen Empfänger- und Senderanschlüssen bereitzustellen.

7. Multiband-Antennenschalter nach Anspruch 5, wobei die Zweige des Leistungsverstärkermoduls und des Front-End-Moduls mit dem Antenneanschluss mittels 3-Anschluss-Zirkulatoren verbunden sind, wobei ein 3-Anschluss-Zirkulator die Übertragungs-/Empfangs-Duplexfunktion bereitstellt und ein weiterer 3-Anschluss-Zirkulator in jedem Leistungsverstärkermodulzweig angeordnet ist und einen Anschluss des Zirkulators terminiert aufweist, um eine Isolation zwischen Empfänger- und Senderanschlüssen bereitzustellen.

8. Multiband-Antennenschalter nach Anspruch 7, wobei ein weiterer 3-Anschluss-Zirkulator in jedem Front-End-Modulzweig angeordnet ist und einen Anschluss des Zirkulators terminiert aufweist, um eine Isolation zwischen Empfänger- und Senderanschlüssen bereitzustellen.

9. Multiband-Antennenschalter nach Anspruch 1, wobei die Übertragungs-/Empfangs-Duplexfunktion mittels einer Leistungsteileranordnung erhalten wird.

10. Multiband-Antennenschalter nach Anspruch 9, wobei der Leistungsteiler eine flache Frequenzantwort über ein Breitband und gesteuerte Impedanzen zu allen Anschlüssen aufweist.

11. Multiband-Antennenschalter nach Anspruch 1, wobei der Multiband-Antennenschalter in der Lage ist, vier GSMzusammen mit acht WCDMA-Bändern zu empfangen.

12. Tragbares Funkkommunikationsgerät mit einem Multiband-Antennenschalter nach einem der vorangehenden Ansprüche.

## Revendications

1. Commutateur d'antenne multibande comportant :
- un module d'amplificateur de puissance ayant un port d'antenne (1) pouvant être connecté à une antenne, dans lequel le module d'amplificateur de puissance comporte une première branche pour des bandes de basses fréquences et une seconde branche pour des bandes de hautes fréquences, dans lequel chaque branche comporte un moyen de duplexage (6, 7, 26, 27) agencé pour diviser chaque branche en une branche de réception et une branche d'émission, un amplificateur de puissance (21, 22) pour les bandes de fréquences de cette branche et une batterie de filtres (11, 12) connectée à un moyen de commutation (41, 42) agencé pour commuter entre des bandes de fréquences dans la branche respective afin de connecter la branche à une section d'émetteur d'un émetteur-récepteur (5) ; chaque branche pouvant en outre être connectée au port d'antenne par l'intermédiaire d'un diplexeur (9),
- un module d'extrémité avant de réception comportant une première branche de bande de basses fréquences et une seconde branche de bande de hautes fréquences pouvant être connecté au port d'antenne (1) en passant par le diplexeur (9) et les premier et second moyens de duplexage (6, 7, 26, 27) dans le module d'amplificateur de puissance et en passant par les moyens de commutation (42, 44) pouvant être connectés à une section de réception d'un émetteur-récepteur, dans lequel ledit module d'amplificateur de puissance et le module d'extrémité avant sont capables de couvrir un certain nombre de bandes de fréquences.

2. Commutateur d'antenne multibande selon la revendication 1, dans lequel les moyens de commutation (41, 43) dans la branche de bande de basses fréquences sont agencés pour effectuer une commutation entre deux bandes.

3. Commutateur d'antenne multibande selon la revendication 1, dans lequel les moyens de commutation (42, 44) dans la branche de bande de hautes fréquences sont agencés pour effectuer une commutation entre trois bandes.

4. Commutateur d'antenne multibande selon la revendication 1, dans lequel les batteries de filtres (11, 12) comprennent un agencement de filtres pour les différentes bandes de fréquences.

5. Commutateur d'antenne multibande selon la revendication 1, dans lequel les moyens de duplexage (6, 7) sont des circulateurs.

6. Commutateur d'antenne multibande selon la revendication 5, dans lequel les branches du module d'amplificateur de puissance et du module d'extrémité avant sont connectées au port d'antenne au moyen de circulateurs à 4 ports, un circulateur pour chaque branche, un port du circulateur étant terminé pour établir un isolement entre des ports de récepteur et d'émetteur.

7. Commutateur d'antenne multibande selon la revendication 5, dans lequel les branches du module d'amplificateur de puissance et du module d'extrémité avant sont connectées au port d'antenne au moyen de circulateurs à 3 ports, un circulateur à 3 ports remplissant la fonction de duplexage d'émission/réception, et un autre circulateur à 3 ports étant agencé dans chaque branche du module d'amplificateur de puissance et ayant un port du circulateur terminé pour établir un isolement entre des ports de récepteur et d'émetteur.

8. Commutateur d'antenne multibande selon la revendication 7, dans lequel un autre circulateur à 3 ports est agencé dans chaque branche du module d'extrémité avant et un port du circulateur est terminé pour établir un isolement entre les ports de récepteur et d'émetteur.

9. Commutateur d'antenne multibande selon la revendication 1, dans lequel la fonction de duplexage d'émission/réception est obtenue au moyen d'un agencement diviseur de puissance.

10. Commutateur d'antenne multibande selon la revendication 9, dans lequel le diviseur de puissance a une réponse en fréquence plate sur une large bande et des impédances commandées à tous les ports.

11. Commutateur d'antenne multibande selon la revendication 1, lequel commutateur d'antenne multibande est apte à recevoir et envoyer quatre bandes GSM en même temps que huit bandes WCDMA.

12. Dispositif de communication radio portable comportant un commutateur d'antenne multibande tel que revendiqué dans l'une quelconque des revendications précédentes.
